# EUROPEAN PATENT APPLICATION

(11) **EP 4 779 143 A2**
(43) Date of publication of application: **22.07.2026**
(21) Application number: 26151870.8
(22) Date of filing: 14.01.2026
(51) Int. Cl.: F02K 1/72, F02K 1/76

(54) **NACELLE COMPRESSION ROD**

(30) Priority: 15.01.2025 IN 202511003444
(71) Applicant: Rohr, Inc., Chula Vista, CA 91910-2098 (US)
(72) Inventor: RADHAKRISHNAN, Senthilkumar, 562149 Bangalore, KA (IN); NAYAK, Pramoda Kumar, 560064 Bangalore, KA (IN)
(74) Representative: Dehns

(57) **Abstract**

A nacelle compression rod is provided that includes a central member (78) and first and second rod extensions (80, 82). The central member (78) extends axially between first and second end surfaces (86A, 86B). The first rod extension (80), FRE, extends between an FRE spring end surface and an FRE tip surface. The second rod extension (SRE) extends between an SRE spring end surface and an SRE tip surface. The central member (78) includes a first end bore (92) extending axially into the central member (78) from the first end surface (86A), and a second end bore (94) extending axially into the central member (78) from the second end surface. The first rod extension (80) is partially disposed within the first end bore (92), and is linearly translatable. The second rod extension (82) is partially disposed within the second end bore (94), and is linearly translatable. The first end rod extension is biased axially outward and the second end rod extension is biased axially outward.

## Description

### BACKGROUND

### 1. Technical Field

The disclosure generally relates to gas turbine propulsion systems for aircraft, and more particularly to the design of compression rods used for mounting thrust reverser halves.

### 2. Background Information

Modern aircraft may utilize one or more gas turbine engines. A gas turbine engine may be housed in a nacelle. Often, the nacelle includes a thrust reverser. The thrust reverser includes an inner fixed structure (IFS) surrounding the engine which forms the interior surface of a bypass air duct through the thrust reverser. The IFS defines a core compartment that surrounds the engine. During various operating conditions, such as during reverse thrust, pressure in the duct is greater than the pressure in the core compartment around the engine. In these conditions, two IFS halves may be pushed together, i.e., inward toward the engine. In certain cases, this load may be reacted with a compression rod that extends between the two IFS halves.

### SUMMARY

According to an aspect of the present disclosure, a nacelle compression rod is provided that includes a central member, a first rod extension, and a second rod extension (SRE). The central member extends axially between a first end surface and a second end surface along an axial centerline. The first rod extension extends axially between a FRE spring end surface and a FRE tip surface. The second rod extension (SRE) extends axially between an SRE spring end surface and an SRE tip surface. The central member includes a first end bore extending axially into the central member from the first end surface along the axial centerline, and a second end bore extending axially into the central member from the second end surface along the axial centerline. The first rod extension is partially disposed within the first end bore such that the FRE tip surface is exposed outside of the central member, and is linearly translatable within the first end bore. The second rod extension is partially disposed within the second end bore such that the SRE tip surface is exposed outside of the central member, and is linearly translatable within the second end bore. The first end rod extension is biased axially outward and the second end rod extension is biased axially outward.

In any of the aspects or embodiments described above and herein, the first end bore may extend axially between the first end surface and a first base surface, and the second end bore may extend axially between the second end surface and a second base surface.

In any of the aspects or embodiments described above and herein, the nacelle compression rod may include a first rod spring disposed in the first end bore between the first rod extension and the first base surface, and a second rod spring disposed in the second end bore between the second rod extension and the second base surface.

In any of the aspects or embodiments described above and herein, the first rod spring and the second rod spring may be coil springs.

In any of the aspects or embodiments described above and herein, the FRE tip surface and the SRE tip surface may each have a tapered configuration.

In any of the aspects or embodiments described above and herein, the first end bore (FEB) may have a FEB depth that extends axially between the first base surface and the first end surface, and the first rod extension may have an FRE axial length that extends between the FRE spring end surface and the FRE tip surface, and the FEB depth may be less than the FRE axial length.

In any of the aspects or embodiments described above and herein, the second end bore (SEB) may have a SEB depth that extends axially between the second base surface and the second end surface, and the second rod extension may have an SRE axial length that extends between the SRE spring end surface and the SRE tip surface, and the SEB depth may be less than the SRE axial length.

In any of the aspects or embodiments described above and herein, the first rod extension may have an FRE axial length and the first rod extension may have a constant FRE cross-sectional geometry along the FRE axial length, and the second rod extension may have an SRE axial length and the second rod extension may have a constant SRE cross-sectional geometry along the SRE axial length.

In any of the aspects or embodiments described above and herein, the first rod extension may be retained within the first end bore, and the second rod extension may be retained within the second end bore.

In any of the aspects or embodiments described above and herein, the central member may have an exterior surface and includes a first fluid port that extends between the exterior surface and the first end bore, and a second fluid port that extends between the exterior surface and the second end bore, and the compression rod may be configured to use a fluid to bias the first end rod extension axially outward and to bias the second end rod extension axially outward.

According to an aspect of the present disclosure, a nacelle compression rod is provided that includes a central member, a first rod extension (FRE), and a second rod extension (SRE). The central member extends axially between a first end surface and a second end surface and extends along an axial centerline. The central member includes a central bore that extends between the first end surface and the second end surface along the axial centerline. The first rod extension extends axially between a FRE spring end surface and a FRE tip surface. The second rod extension (SRE) extends axially between an SRE spring end surface and an SRE tip surface. The first rod extension is partially disposed within the central bore at the first end surface such that the FRE tip surface is exposed outside of the central member, and is linearly translatable within the central bore. The second rod extension is partially disposed within the central bore at the second end surface such that the SRE tip surface is exposed outside of the central member, and is linearly translatable within the central bore. The first end rod extension is biased axially outward and the second end rod extension is biased axially outward.

In any of the aspects or embodiments described above and herein, the nacelle compression rod may include a rod spring disposed in the central bore between the first rod extension and the second rod extension, and the rod spring may be a coil spring.

In any of the aspects or embodiments described above and herein, the central member may have an exterior surface and may include a fluid port that extends between the exterior surface and the central bore, and the compression rod may be configured to use a fluid to bias the first end rod extension axially outward and to bias the second end rod extension axially outward.

According to an aspect of the present disclosure, a nacelle compression rod system is provided that includes a compression rod and a pressurized source of fluid. The compression rod includes a central member, a first rod extension (FRE), and a second rod extension (SRE). The central member extends axially between a first end surface and a second end surface along an axial centerline. The first rod extension extends axially between a FRE spring end surface and a FRE tip surface. The second rod extension extends axially between an SRE spring end surface and an SRE tip surface. The central member includes a first end bore that extends axially into the central member from the first end surface along the axial centerline, and a second end bore that extends axially into the central member from the second end surface along the axial centerline. The first rod extension is partially disposed within the first end bore such that the FRE tip surface is exposed outside of the central member, and is linearly translatable within the first end bore. The second rod extension is partially disposed within the second end bore such that the SRE tip surface is exposed outside of the central member, and is linearly translatable within the second end bore. The central member has an exterior surface and includes a first fluid port that extends between the exterior surface and the first end bore, and a second fluid port that extends between the exterior surface and the second end bore. The pressurized source of fluid is in fluid communication with the first fluid port and the second fluid port. Fluid from the pressurized fluid source biases the first end rod extension axially outward and biases the second end rod extension axially outward.

In any of the aspects or embodiments described above and herein, the fluid may be air or hydraulic fluid.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 diagrammatically illustrates a perspective view of a nacelle embodiment.
FIG. 2 diagrammatically illustrates an aft view of a nacelle embodiment in a closed position.
FIG. 3 diagrammatically illustrates an aft view of a nacelle embodiment in an open position.
FIG. 4 diagrammatically illustrates a perspective view of an inner fixed structure embodiment.
FIG. 5 diagrammatically illustrates a perspective view of a compression rod embodiment.
FIG. 6 diagrammatically illustrates an engagement feature embodiment.
FIG. 7 diagrammatically illustrates an engagement feature embodiment.
FIG. 8 diagrammatically illustrates a compression rod embodiment according to the present disclosure.
FIG. 9 diagrammatically illustrates a compression rod embodiment according to the present disclosure.
FIG. 10 diagrammatically illustrates a compression rod embodiment according to the present disclosure.
FIG. 11 diagrammatically illustrates a compression rod embodiment according to the present disclosure.
FIG. 12 diagrammatically illustrates a compression rod embodiment according to the present disclosure.
FIG. 13 diagrammatically illustrates a compression rod embodiment according to the present disclosure.
FIG. 14 is a diagrammatic representation of a compression rod engaging with an engagement feature.

### DETAILED DESCRIPTION

A compression rod and a compression rod system for a nacelle are disclosed in accordance with various embodiments. As described above, a thrust reverser may include a duct with an inner wall that surrounds and forms a core compartment around the engine. Variations in air pressure in the fan duct and in the core compartment may result in forces that need to be reacted. One method of reacting these forces in use on commercial airliners today is a compression rod. The compression rod contacts engagement points on each thrust reverser half to take compression loads between them. Alignment between the compression rod ends and the thrust reverser half engagement points when the halves are closing to generate the desired preload and ensure good contact is important.

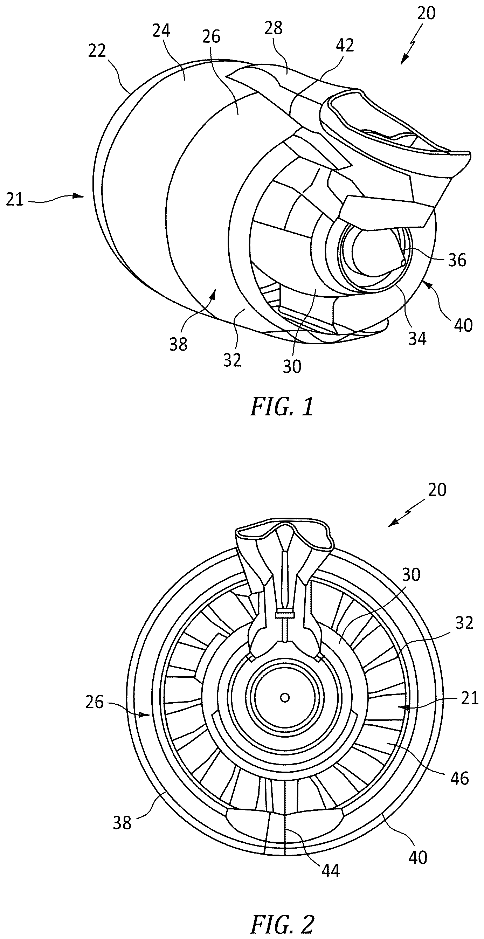

Referring to FIG. 1, a nacelle 20 for a gas turbine engine 21 is illustrated according to various embodiments. The nacelle 20 may comprise an inlet 22, a fan cowl 24, and a thrust reverser 26. The nacelle 20 may be coupled to a pylon 28, which may mount the nacelle 20 to an aircraft wing or aircraft body. The thrust reverser 26 may comprise an inner fixed structure ("IFS") 30 and an outer fixed structure ("OFS") 32. Bypass air from an engine fan may flow between the IFS 30 and the OFS 32 in a bypass air duct, and may exit the duct at a nozzle formed generally between the IFS and OFS to provide the majority of the thrust. A nozzle 34 may surround a centerbody 36, between which the engine exhaust stream exits to provide additional thrust. The thrust reverser 26 may further be split into a left half 38 and a right half 40. The left half 38 and the right half 40 may be hinged to the pylon 28 at hinges 42. The left half 38 and the right half 40 may hinge open at hinges 42 in order to provide access to the engine.

Referring to FIG. 2, an aft view of nacelle 20 in a closed position is illustrated according to various embodiments. The left and right halves 38, 40 of thrust reverser 26 may be split along split line 44. The engine fan 46 is visible through the bypass air duct.

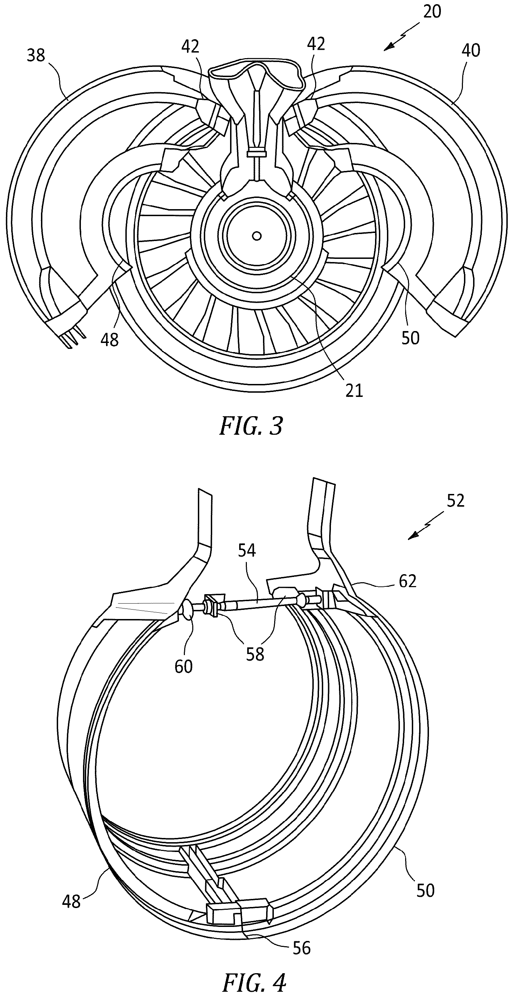

Referring to FIG. 3, an aft view of nacelle 20 with the thrust reverser halves 38, 40 hinged open is illustrated according to various embodiments. The thrust reverser halves 38, 40 and inner fixed structure (IFS) halves 48, 50 are hinged open at hinges 42 in order to provide access to the engine 21. The thrust reverser halves 38, 40 and IFS halves 48, 50 may be collectively or individually referred to as "nacelle structures".

Referring to FIG. 4, a perspective view of an IFS 52 is illustrated according to various embodiments, which shows an exemplary location where a compression rod 54 may be used. In various embodiments, one or more compression rods 54 may be located at any position in a thrust reverser and may transmit loads between halves of the thrust reverser. The IFS left half 48 and the IFS right half 50 of the IFS 52 may be split along split line 56. A compression rod 54 may be configured to transmit loads between the left half 48 and the right half 50 of the IFS 52. The compression rod 54 may be mounted within mounting brackets (also referred to herein as pylon brackets) 58. The compression rod 54 may contact the left half 48 and the right half 50 at engagement features 60, 62. The engagement features 60, 62 may be coupled respectively to the left half 48 and the right half 50 of the IFS 52.

In response to the left half 48 and the right half 50 of the IFS 52 hinging open, the compression rod 54 may disengage from the engagement features 60, 62. The compression rod 54 may be retained by mounting brackets 58. When the left half 48 and the right half 50 of the IFS 52 are in a closed configuration, the compression rod 54 may be engaged with the engagement features 60, 62.

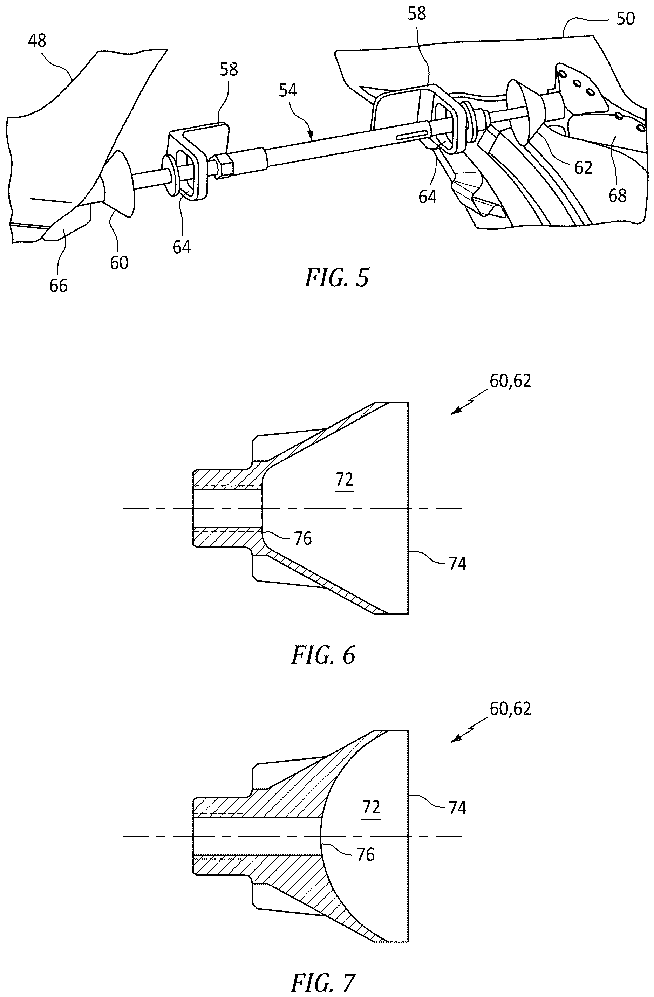

Referring to FIG. 5, a perspective view of compression rod 54 is illustrated. The mounting brackets 58 may comprise apertures 64 which are larger in diameter than compression rod 54, which may allow movement of compression rod 54 within mounting brackets 58. In response to the left half 48 and the right half 50 of the IFS 52 hinging closed, the compression rod 54 may engage the engagement features 60, 62. A first mounting member 66 may be attached to left half 48 of the IFS 52. The engagement feature 60 may be coupled to the first mounting member 66. A second mounting member 68 may be attached to the right half 50 of the IFS 52. The engagement feature 62 may be coupled to second mounting member 68.

Referring to FIGS. 6 and 7, each engagement feature 60, 62 has an interior pocket 72 configured to receive an end of the compression rod 54. The interior pocket 72 extends from an open end 74 to a base surface 76. The interior pocket 72 is generally concave and therefore decreases in cross-sectional area in a direction from the open end 74 to the base surface 76. FIG. 6 diagrammatically illustrates an engagement feature 60, 62 with an interior pocket 72 having a partial conical geometry. FIG. 7 diagrammatically illustrates an engagement feature 60, 62 with an interior pocket 72 having an arcuate geometry; e.g., a partial spherical geometry. The interior pockets 72 shown in FIGS. 6 and 7 are examples of interior pocket 72 geometries that may be used. The present disclosure is not limited to any particular engagement feature pocket 72 other than one having an interior pocket 72 that is concave.

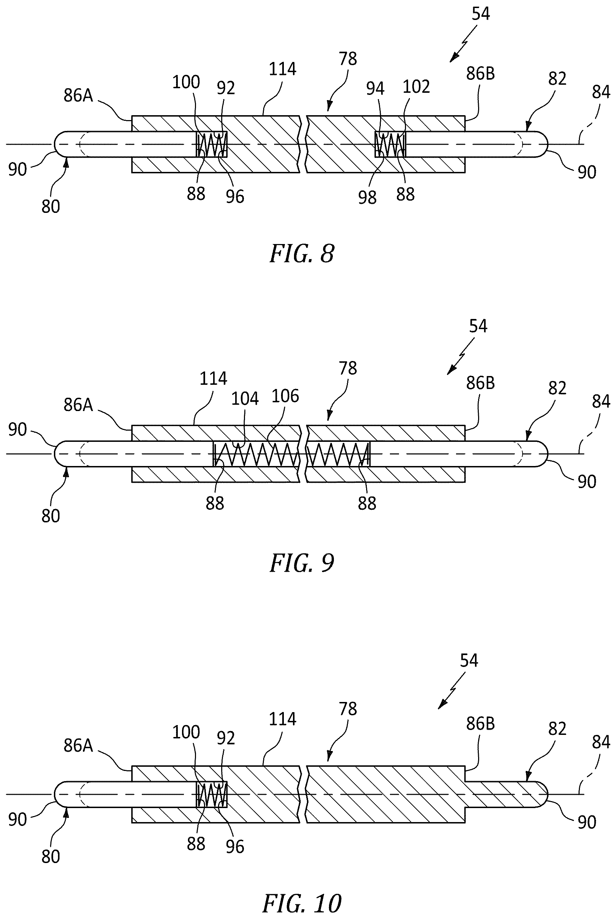

Present disclosure compression rod 54 embodiments are diagrammatically shown in FIGS. 8-13. The compression rod 54 includes a central member 78, a first rod extension 80, and a second rod extension 82. In some embodiments, a present disclosure compression rod 54 may include at least one rod spring. The central member 78 extends axially (i.e., along an axial centerline 84) between a first end surface 86A and a second end surface 86B.

The first and second rod extensions 80, 82 may share the same geometric configuration, but that is not required. Each rod extension 80, 82 extends an axial length between a spring end surface 88 and a tip surface 90. In some embodiments, the rod extensions 80, 82 have a uniform cross-sectional geometry between the spring end surface 88 and the tip surface 90; e.g., a circular cross-sectional geometry, or a polygonal cross-sectional geometry, or the like. As will be detailed herein, some rod extension 80, 82 embodiments do not have a uniform cross-sectional geometry between the spring end surface 88 and the tip surface 90. The present disclosure is not limited to any particular rod extension 80, 82 cross-sectional geometry. The tip surface 90 shown has a partial spherical configuration but that is not required; e.g., other tapered configurations may be used. A tapered surface is understood to be beneficial for locating the rod extension 80, 82 relative to an engagement feature 60, 62, but a tapered tip surface 90 configuration is not required.

In the compression rod 54 embodiment shown in FIG. 8, the central member 78 includes a first end bore 92 and a second end bore 94, both disposed on the axial centerline 84. The first end bore 92 has a depth that extends axially between a first base surface 96 and the first end surface 86A. The depth of the first end bore 92 may be less than the axial length of the first rod extension 80. The second end bore 94 has a depth that extends axially between a second base surface 98 and the second end surface 86B. The depth of the second end bore 94 may be less than the axial length of the second rod extension 82 . The first end bore 92 is configured to receive the first rod extension 80 and to allow axial translation of the first rod extension 80 within the first end bore 92. The second end bore 94 is configured to receive the second rod extension 82 and to allow axial translation of the second rod extension 82 within the second end bore 94.

In assembled form of the embodiment shown in FIG. 8, the compression rod 54 includes a first rod spring 100 disposed in the first end bore 92, between the first base surface 96 of the first end bore 92 and the spring end surface 88 of the first rod extension 80. The compression rod 54 further includes a second rod spring 102 disposed in the second end bore 94, between the second base surface 98 of the second end bore 94 and the spring end surface 88 of the second rod extension 82. The first and second rod springs 100, 102 may be helical springs. The first rod spring 100 is configured to produce a biasing force that acts between the first base surface 96 of the first end bore 92 and the spring end surface 88 of the first rod extension 80. The second rod spring 102 is configured to produce a biasing force that acts between the second base surface 98 of the second end bore 94 and the spring end surface 88 of the second rod extension 82. The first and second rod springs 100, 102 each have a spring rate that represents the amount of force needed to compress the respective spring a predetermined distance. It is assumed, but not required, that the respective spring rates are linear. Hence, the biasing force produced by the first and second rod springs 100, 102 are a function of the amount that the respective spring is compressed.

In the compression rod 54 embodiment shown in FIG. 9, the central member 78 includes a central bore 104 that extends axially between the first end surface 86A and the second end surface 86B. In this embodiment, the first and second rod extensions 80, 82 are configured the same; e.g., as described above regarding the embodiment shown in FIG. 8. This compression rod 54 embodiment includes a rod spring 106 disposed within the central bore 104. The rod spring 106 may be a single helical spring, or may include nested springs. In assembled form, the rod spring 104 is configured to produce a biasing force that acts between the spring end surface 88 of the first rod extension 80 and the spring end surface 88 of the second rod extension 82.

In the compression rod 54 embodiment shown in FIG. 10, the central member 78 includes a first end bore 92 that extends axially between the first end surface 86A and a first base surface 96, and has a depth that extends axially between the first base surface 96 and the first end surface 86A. The depth of the first end bore 92 may be less than the axial length of the first rod extension 80. The first end bore 92 is configured to receive the first rod extension 80 and to allow axial translation of the first rod extension 80 within the first end bore 92. A first rod spring 100 is disposed within the first end bore 92 axially between the first rod extension 80 and the first base surface 96. In assembled form, the first rod spring 100 is configured to produce a biasing force that acts between the spring end surface 88 of the first rod extension 80 and the first base surface 96. A second rod extension 82 extends axially out from the second end surface 86B of the central member 78 and is fixed to the second member.

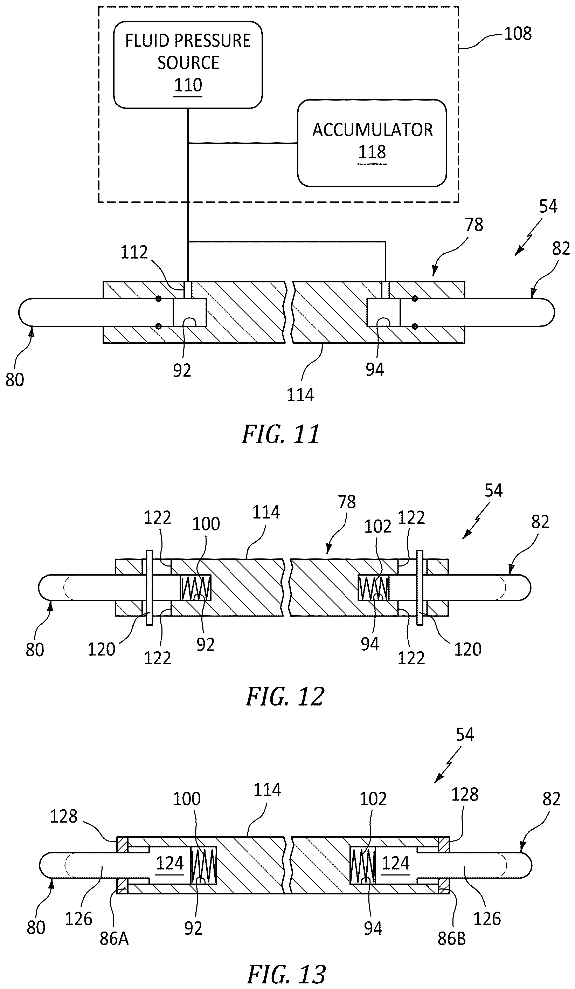

In the compression rod 54 embodiment shown in FIG. 11, the central member 78 includes a first end bore 92 and a second end bore 94 configured as described above and shown in FIG. 8. In this embodiment, the compression rod 54 is in communication with a fluid pressurizing system 108 that includes a source of pressurized fluid 110. The compression rod 54 may include a first end fluid port 112 that extends from an exterior surface 114 of the compression rod 54 to the first end bore 92, and a second end fluid port 116 that extends from the exterior surface 114 of the compression rod 54 to the second end bore 94. The pressurized fluid source 110 may be a pneumatic fluid source or a hydraulic fluid source. The compression rod 54 includes a first fluid port 112 that provides fluid access for the fluid into the first end bore 92 and a second fluid port 116 that provides fluid access for the fluid into the second end bore 94. The fluid from the pressurized fluid source 110 functions as a biasing force against the respective rod extension 80, 82. The fluid pressurizing system 108 may be configured to control the fluid pressure within the first and second end bores 92, 94. Axial travel of a rod extension 80, 82 inwardly may cause fluid disposed within an end bore 92, 94 to exit the end bore 92, 94 to maintain a given pressure within the end bore 92, 94. A non-limiting example of a fluid device that may be included in the fluid pressurizing system 108 to accommodate fluid ingress and egress from the end bores is an accumulator 118. The present disclosure is not limited to any particular fluid pressurizing system 108 configuration. In a compression rod 54 embodiment like that shown in FIG. 9 and described herein that includes a central bore 104 that extends axially between the first end surface 86A and the second end surface 86B, a single fluid port may be included that extends from the exterior surface 114 of the compression rod 54 to the central bore 104.

In some embodiments, a compression rod 54 may be configured with "retained" rod extensions 80, 82. The term "retained" is used herein to refer to a rod extension 80, 82 that is limited in axial travel and is prevented from being removed from the central member 78 when the compression rod 54 is in assembled form. FIG. 12 illustrates an embodiment of a compression rod 54 having retained rod extensions 80, 82. In this embodiment, a pin 120 extends through the rod extension 80, 82 and extends into a slot 122 disposed within the central member 78. The pin / slot arrangement limits the axial travel of the rod extension. FIG. 13 illustrates an alternative embodiment of a compression rod 54 having retained rod extensions 80, 82. In this embodiment, the rod extensions 80, 82 have a head portion 124 with a head diameter and a shaft portion 126 with a shaft portion diameter. The shaft portion diameter is less than the head diameter. In this embodiment, a cap 128 is attached to the respective end surface 86A, 86B that has a shaft aperture sized to mate with the shaft portion 126 of the rod extension 80, 82. The head portion diameter is greater than the diameter of the shaft aperture. As a result, the head portion 124 is captured within the respective end bore 92, 94. The difference between the head portion 124 axial length and the depth of the end bore 92, 94 dictates the axial travel of the rod extension 80, 82. The examples of retained rod extensions 80, 82 shown in FIGS. 12 and 13 are provided to illustrate how a rod extension 80, 82 may be retained and the present disclosure is not limited to these examples. Moreover, the present disclosure does not require retained rod extensions 80, 82.

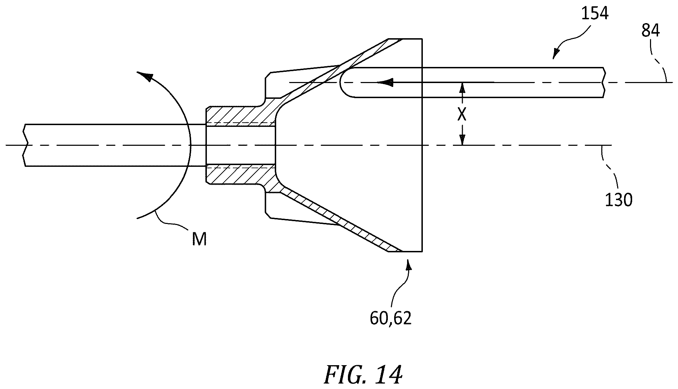

Referring to FIG. 14, the present disclosure addresses the issue of compression rods 154 that are misaligned with the corresponding engagement features 60,62. The nacelle structures 24, 26 (e.g., see FIG. 1) acting on the compression rods 154 are substantial in size and as a result have large tolerances. The nacelle structures 24, 26 and the compression rods 154 may also move during use and/or over time. As a result, misalignment between the compression rod 154 and the engagement features 60, 62 that receive the compression rods 154 can occur. If the misalignment is appreciable, the compression rod 154 can engage with the engagement feature 60, 62 during the closing of the nacelle structure 24, 26 at a position off center from the centerline 130 of the engagement feature 60, 62. If that occurs, the compression rod 154 may applying a moment "M" to the engagement feature 60, 62. If the force between the compression rod 154 and the engagement feature 60, 62 is large enough, the engagement feature 60, 62 and/or the compression rod 154 may be damaged. FIG. 14 shows a compression rod 154 misaligned with the centerline 130 of the engagement feature 60, 62 (by distance "X") to diagrammatically illustrate how an off-center force may apply a moment M to an engagement feature 60, 62. The present disclosure compression rods 54 (e.g., see FIGS. 8-13) with rod extensions 80, 82 biased outwardly accommodate the misalignment and allow the compression rod 54 to move closer to the centerline 130 of the engagement feature 60, 62 as the nacelle structure 24, 26 is closed. Misalignment may occur during closing of the nacelle structure 24, 26, and/or may occur when there is a change in maneuver loading, or as a result of engine vibration, or due to a sudden surge in fan duct pressure, or the like. As a result, the misalignment is mitigated and the potential for damage substantially decreased.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A nacelle compression rod, comprising:
a central member (78) that extends axially between a first end surface (86A) and a second end surface (86B) along an axial centerline;
a first rod extension (80), FRE, that extends axially between a FRE spring end surface and a FRE tip surface; and
a second rod extension (82), SRE, that extends axially between an SRE spring end surface and an SRE tip surface;
wherein the central member (78) includes a first end bore (92) extending axially into the central member (78) from the first end surface (86A) along the axial centerline, and a second end bore (94) extending axially into the central member (78) from the second end surface (86B) along the axial centerline; and
wherein the first rod extension (80) is partially disposed within the first end bore (92) such that the FRE tip surface is exposed outside of the central member (78), and is linearly translatable within the first end bore (92); and
wherein the second rod extension (82) is partially disposed within the second end bore (94) such that the SRE tip surface is exposed outside of the central member (78), and is linearly translatable within the second end bore (94); and
wherein the first end rod extension is biased axially outward and the second end rod extension is biased axially outward.

2. The nacelle compression rod of claim 1, wherein the first end bore (92) extends axially between the first end surface (86A) and a first base surface (96), and the second end bore (94) extends axially between the second end surface (86B) and a second base surface (98).

3. The nacelle compression rod of claim 2, further comprising a first rod spring (100) disposed in the first end bore (92) between the first rod extension (80) and the first base surface (96), and a second rod spring (102) disposed in the second end bore (94) between the second rod extension (82) and the second base surface (98).

4. The nacelle compression rod of claim 3, wherein the first rod spring (100) and the second rod spring (102) are coil springs.

5. The nacelle compression rod of claim 4, wherein the FRE tip surface and the SRE tip surface each have a tapered configuration.

6. The nacelle compression rod of claim 2, wherein the first end bore (92), FEB, has a FEB depth that extends axially between the first base surface (96) and the first end surface (86A), and the first rod extension (80) has an FRE axial length that extends between the FRE spring end surface and the FRE tip surface, and wherein the FEB depth is less than the FRE axial length, and optionally

7. The nacelle compression rod of claim 6, wherein the second end bore (94), SEB, has a SEB depth that extends axially between the second base surface (98) and the second end surface (86B), and the second rod extension (82) has an SRE axial length that extends between the SRE spring end surface and the SRE tip surface, and wherein the SEB depth is less than the SRE axial length.

8. The nacelle compression rod of any preceding claim, wherein the first rod extension (80) has an FRE axial length and the first rod extension (80) has a constant FRE cross-sectional geometry along the FRE axial length, and wherein the second rod extension (82) has an SRE axial length and the second rod extension (82) has a constant SRE cross-sectional geometry along the SRE axial length.

9. The nacelle compression rod of any preceding claim, wherein the first rod extension (80) is retained within the first end bore (92), and the second rod extension (82) is retained within the second end bore (94).

10. The nacelle compression rod of any preceding claim, wherein the central member (78) has an exterior surface (114) and includes a first fluid port (112) that extends between the exterior surface (114) and the first end bore (92), and a second fluid port (116) that extends between the exterior surface (114) and the second end bore (94); and
wherein the compression rod is configured to use a fluid to bias the first end rod extension axially outward and to bias the second end rod extension axially outward.

11. A nacelle compression rod, comprising:
a central member (78) that extends axially between a first end surface (86A) and a second end surface (86B) along an axial centerline, wherein the central member (78) includes a central bore (104) that extends between the first end surface (86A) and the second end surface (86B) along the axial centerline;
a first rod extension (80), FRE, that extends axially between a FRE spring end surface and a FRE tip surface; and
a second rod extension (82), SRE, that extends axially between an SRE spring end surface and an SRE tip surface;
wherein the first rod extension (80) is partially disposed within the central bore (104) at the first end surface (86A) such that the FRE tip surface is exposed outside of the central member (78), and is linearly translatable within the central bore (104); and
wherein the second rod extension (82) is partially disposed within the central bore (104) at the second end surface (86B) such that the SRE tip surface is exposed outside of the central member (78), and is linearly translatable within the central bore (104); and
wherein the first end rod extension is biased axially outward and the second end rod extension is biased axially outward.

12. The nacelle compression rod of claim 11, further comprising a rod spring disposed in the central bore (104) between the first rod extension (80) and the second rod extension (82), and optionally wherein the rod spring is a coil spring, and optionally wherein the FRE tip surface and the SRE tip surface each have a tapered configuration, and optionally wherein the first rod extension (80) has an FRE axial length and the first rod extension (80) has a constant FRE cross-sectional geometry along the FRE axial length, and wherein the second rod extension (82) has an SRE axial length and the second rod extension (82) has a constant SRE cross-sectional geometry along the SRE axial length, and optionally wherein the first rod extension (80) is retained within the central bore (104), and the second rod extension (82) is retained within the central bore (104).

13. The nacelle compression rod of claim 11 or 12, wherein the central member (78) has an exterior surface (114) and includes a fluid port that extends between the exterior surface (114) and the central bore (104); and
wherein the compression rod is configured to use a fluid to bias the first end rod extension axially outward and to bias the second end rod extension axially outward.

14. A nacelle compression rod system, comprising:
a compression rod that includes:
a central member (78) that extends axially between a first end surface (86A) and a second end surface (86B) along an axial centerline;
a first rod extension (80), FRE, that extends axially between a FRE spring end surface and a FRE tip surface; and
a second rod extension (82), SRE, that extends axially between an SRE spring end surface and an SRE tip surface;
wherein the central member (78) includes a first end bore (92) extending axially into the central member (78) from the first end surface (86A) along the axial centerline, and a second end bore (94) extending axially into the central member (78) from the second end surface (86B) along the axial centerline; and
wherein the first rod extension (80) is partially disposed within the first end bore (92) such that the FRE tip surface is exposed outside of the central member (78), and is linearly translatable within the first end bore (92); and
wherein the second rod extension (82) is partially disposed within the second end bore (94) such that the SRE tip surface is exposed outside of the central member (78), and is linearly translatable within the second end bore (94); and
wherein the central member (78) has an exterior surface (114) and includes a first fluid port (112) that extends between the exterior surface (114) and the first end bore (92), and a second fluid port (116) that extends between the exterior surface (114) and the second end bore (94); and
a pressurized source of fluid in fluid communication with the first fluid port (112) and the second fluid port (116), wherein fluid from the pressurized fluid source biases the first end rod extension axially outward and biases the second end rod extension axially outward.

15. The nacelle compression rod system of claim 14, wherein the fluid is air, or wherein the fluid is hydraulic fluid.
